# EUROPEAN PATENT SPECIFICATION

(11) **EP 3 882 088 B1**
(45) Date of publication and mention of the grant of the patent: **09.08.2023**
(21) Application number: 21161678.4
(22) Date of filing: 10.03.2021
(51) Int. Cl.: B60R 19/56, B60R 19/00

(54) **LATERAL PROTECTION DEVICE FOR HEAVY ROAD VEHICLES AND VEHICLE COMPRISING THE SAME**
SEITLICHE SCHUTZVORRICHTUNG FÜR SCHWERLASTFAHRZEUG UND FAHRZEUG MIT EINER SOLCHEN VORRICHTUNG
DISPOSITIF DE PROTECTION LATÉRALE POUR VÉHICULES POIDS LOURDS ET VÉHICULE LE COMPRENANT

(30) Priority: 17.03.2020 IT 202000005656
(43) Date of publication of application: 22.09.2021
(73) Proprietor: Reco S.r.l., 23875 Osnago (LC) (IT)
(72) Inventor: REDAELLI, Guido, I-23875 Osnago (LC) (IT); GALLETTI, Davide Gianni Mario, I-23875 Osnago (LC) (IT)
(74) Representative: Mati, Silvia

(56) References cited:
- EP-A1- 1 500 559
- EP-A1- 3 323 681
- WO-A1-03/093066
- DE-A1- 10 119 249
- US-A- 4 877 266
- US-A1- 2018 244 228

## Description

### TECHNICAL FIELD

The present invention generally relates to a lateral protection device for heavy road vehicles such as, for example, trucks, articulated vehicles, semi-trailers and so on. In particular, the present invention relates to particularly robust and at the same time versatile lateral protection devices.

### BACKGROUND

With lateral protection device it is known to indicate the protective structures usually mounted on the lateral sides of heavy vehicles such as trucks, articulated lorries, semi-trailers or similar vehicles also known as "LPDs" and better defined in the Regulation no. 73 of the Economic Commission for Europe of the United Nations (UN/ECE) of 9/12/2010. These structures have the main purpose of preventing access to the space below the vehicle platform in order to prevent a pedestrian, cyclist or motorcyclist, who walks or travels alongside the vehicle, from inadvertently accessing it. In this position, in fact, the pedestrian / cyclist / motorcyclist would risk being crushed by the wheels of the vehicle. A further purpose of these lateral protection devices is to improve the aerodynamics of the vehicle and, in some cases, also the aesthetics of the vehicle.

The most common lateral protection devices today comprise a bulkhead made of one or more elongated bars, mostly substantially flat, which extend along and below the side edge of the vehicle platform, remaining substantially perpendicular to the platform. The bulkhead is supported by a series of support legs to which it is fixedly connected to give rigidity to the protection device as a whole. In turn, the support legs are constrained to the vehicle platform in a fixed or overturnable manner.

The overturnable legs are configured so as to allow the bulkhead to rotate with respect to the vehicle platform around a rotation axis parallel to the side edge of the platform. In particular, the overturnable legs allow the bulkhead to be moved between a lowered position in which the assembly formed by legs and bulkhead is arranged substantially perpendicular to the platform, preventing access to the space underneath the vehicle, and a raised position, in which the assembly consisting of legs and bulkhead is arranged in a substantially horizontal position, sloping from the side of the vehicle, allowing access to the space below the vehicle platform.

The overturnable support legs generally consist of a base for connection to the platform configured to be rigidly fixed to the platform, for example to the lower wall of the same, and an upright hinged at one end to the connection base. The overturnable support legs are fixed to the platform so as to define an overturning axis of the uprights, and therewith of the bulkhead rigidly connected to the uprights, parallel to the side edge of the platform. A lateral protection device of this kind is described in US 2018/244228.

In order to keep the support legs in an overturned configuration, a locking pin is generally used which is manually inserted into special seats provided both on the upright and on the connection base to determine the relative positioning between upright and base.

The Applicant has found a scarce practicality of use of the lateral protection devices described above, in particular where it is desired to have access to the space underneath the vehicle. In this circumstance, in fact, it is necessary to lift the entire assembly consisting of the bulkhead and uprights of the support legs, an assembly which has overall dimensions and weights that are scarcely compatible with its easy handling.

The Applicant has also pointed out further types of lateral protection devices which make use of fixed support legs on which a bulkhead provided with one or more doors made on the surface of the bulkhead is fixedly constrained. The doors allow access to containment spaces installed below the vehicle platform.

In these known protection devices, it is not possible to fully exploit the space underneath the vehicle platform since, necessarily, the access doors to the containment spaces have smaller dimensions than the bulkhead, thus limiting the dimensions of the containment spaces that can be housed under the vehicle.

Furthermore, in this type of solution the access doors to the spaces are hinged along their side facing the ground, allowing the door to open downwards. This ensures that access to the space underneath the vehicle is also prevented by the door itself which, in the open configuration, is interposed between the operator and the space under the vehicle.

Last but not least, this configuration is strongly subject to the risk of accidental opening due to the fact that the door weighs downwards and, in the opening condition, in case of rain, it cannot protect the containment spaces from the entrance of water.

Moreover, in this type of solution, the containment spaces are configured to be constrained directly to the vehicle platform, making it difficult to achieve a sealing closure by means of the relative doors, which are independently connected to the platform, through the support legs. In this configuration, a sealing closure is only achievable through extremely high mounting accuracy.

### OBJECTS AND SUMMARY OF THE INVENTION

In light of the above, the problem underlying the present invention is that of devising a lateral protection device that has the necessary strength to effectively prevent access to the space below the vehicle platform in the event of interference or impact by a pedestrian, cycle or motorcycle, but at the same time easy to handle to access this space below.

Within the scope of this problem, an object of the present invention is to provide a lateral protection device which allows to obtain a sealing closure of any containment space housed underneath the vehicle platform.

In accordance with a first aspect thereof, the invention therefore relates to a lateral protection device for heavy road vehicles comprising
- a plurality of support legs comprising at least two support legs each comprising a connection base configured to be rigidly fixed to a platform or to a chassis of a heavy road vehicle according to a fixed reciprocal arrangement, parallel and spaced along a development axis and an upright connected to the connection base at one of its ends, the uprights of the plurality of the support legs being substantially linear, so that the set of uprights of the plurality of support legs defines a plane of the uprights of the support legs, and
- at least one wall element extending elongated along the development axis and bound to at least two first support legs of the plurality of support legs,
characterized in that the wall element is constrained to the uprights of the at least two first support legs at its own side facing the connection bases of the support legs so as to pivot around a rotation axis, parallel to the development axis, between a closed operating position in which the wall element is arranged substantially parallel to the plane of the uprights of the support legs and at least an operating opening position in which the wall element is tilted with respect to the plane of the uprights of the support legs.

The Applicant has identified that thanks to the particular configuration that provides for a wall element hinged to the support legs near their connection bases, it allows to have a highly manageable structure to facilitate access to the space under the vehicle platform.

In particular, the wall element constrained to the support legs in a pivotable manner around a rotation axis, parallel to the development axis and proximal to the connection bases of the support legs, makes it possible to access below the vehicle without necessarily lifting the set of support legs, thus making any containment space located below the platform more easily accessible.

In accordance with a second aspect thereof, the invention relates to a heavy road vehicle comprising a platform having a side edge and a lateral protection device connected to the platform so as to extend below the side edge substantially perpendicularly to the platform characterized in that the lateral protection device is made as described above.

Advantageously, the heavy road vehicle thus configured allows the same advantages described with reference to the lateral protection device according to the invention to be achieved.

The present invention may have at least one of the following preferred features; the latter may in particular be combined with one another as desired in order to meet specific application needs.

In a variant of the invention, the lateral protection device comprises at least one rigid connection element fixed in a direct and rigid manner to at least two second support legs of the plurality of support legs and configured to maintain the at least two second support legs according to the reciprocal fixed, parallel arrangement and spaced apart along the development axis.

Advantageously, the rigid connection element that binds at least two or preferably more support legs allows to realise a sufficiently robust structure that is able to effectively prevent access to the space below the vehicle platform in the event of interference or impact by a pedestrian, cycle or motorcycle, while maintaining the manageability conferred by the particular constraint according to the present invention between the wall element and the support legs.

Preferably, the at least one rigid connection element is a rod.

The rigid connection element can advantageously be made in the form of a rod, allowing to obtain a light and compact structure, but sufficiently strong.

In an alternative embodiment, the at least one rigid connection element is a shelf-like element.

In a further embodiment, the at least one rigid connection element is a rack.

In a further embodiment, the at least one rigid connection element is a hollow box-like element defining a containment space and having an access opening to the containment space facing towards the plurality of support legs.

Alternatively, the rigid connection element can be an accessory element such as a rest shelf for possible containment spaces or directly a box-like element. This conveniently allows to take full advantage of the space underneath the vehicle, allowing access to it in a simple and easy way.

In this way, however, the wall element acts as a cover for any box-like element, without the need to provide additional elements aimed at closing it. Furthermore, the fact that the wall element and the box-like element are connected to the same mounting reference constituted by the support legs, allows to achieve a precise reciprocal positioning between the box-like element and the wall element, thus obtaining that the first one is able to achieve a complete and reliable closure of the second one.

More preferably, the hollow box-like element comprises a sealing element placed along the perimeter of its opening and configured to rest against the wall element when it is in the closed operating position.

Advantageously, in the presence of a sealing element, the wall element is able to provide a sealing closure of the box-like element thanks to the precise reciprocal positioning between the wall element and the box-like element.

In a variant of the invention, the at least one wall element comprises a plurality of elongated bars arranged side by side adjacent to each other or side by side spaced apart from each other.

Preferably, the elongated bars are profile elements respectively comprising a nose extending along the development axis and/or a seat also extending along the development axis and configured to receive and retain the nose obtained on an adjacent bar.

Conveniently, this expedient offers a high mounting versatility of the wall element as well as allowing it to be made in a plurality of different sizes, making it possible to couple a plurality of elongated bars together.

Preferably, the elongated bars are terminated at their ends by means of a shaped angular element.

In a variant of the invention, the at least two first support legs coincide with the at least two second support legs.

In a variant of the invention, the wall element is constrained to the uprights of the at least two first support legs through at least one hinged coupling, parallel to the development axis.

Preferably, the wall element has a curved termination at its own side facing the connection base of the support legs, where the curved termination extends longitudinally parallel to the development axis and is movably housed inside a rail with a complementary conformation to the curved termination and rigidly constrained uprights of the at least two first support legs, the rail being configured to guide the curved termination during rotation about the rotation axis.

Preferably, the curved termination and the rail provide a hinged coupling between the wall element and the at least two first support legs for rotation of the wall element about the rotation axis.

The rail can be made as a single piece or comprise a plurality of rail segments, each constrained to a respective upright of a respective first support leg according to an arrangement parallel to the development axis. In this case, each rail segment houses a respective curved termination section to provide a hinged coupling between the wall element and the uprights of the first support legs.

In a variant of the invention, the at least one wall element comprises a selective locking element configured to go into selective engagement with an edge of the opening of the box-like element.

In addition to or as an alternative to the selective locking element, the wall element can comprise a fixing bracket shaped so as to at least partially embrace a support leg when the wall element is in its closed operating position.

Preferably, the fixing bracket comprises at least one through hole placed so as to overlap a corresponding through hole made on the upright of the support leg, when the fixing bracket embraces the upright.

In a variant of the invention, each upright is hinged at its own end to the respective connection base.

In a variant of the invention, the at least one wall element is made of a plurality of wall sections, each of which can pivot about the rotation axis independently of the further wall sections.

Advantageously, this expedient allows to realise a plurality of independent containment spaces with each wall section of the wall element which acts as a relative cover.

### BRIEF DESCRIPTION OF THE DRAWINGS

Further characteristics and advantages of the present invention will be more evident from the following description of some preferred embodiments thereof made with reference to the appended drawings.

The different features in the individual configurations can be combined with each other as preferred according to the previous description, should it be necessary to avail of the advantages resulting specifically from a particular combination.

In such drawings,
- Figure 1 is a front elevation view in closed configuration of a lateral protection device according to a first embodiment of the present invention;
- Figure 2 is a side elevation view of the lateral protection device of Figure 1 in an open configuration;
- Figure 3 is a side elevation view of the wall element used in the lateral protection device according to the present invention during its assembly;
- Figure 4 is a rear perspective view in closed configuration of the lateral protection device of Figure 1 complete with angular element;
- Figure 5 is a rear perspective view in closed configuration of a lateral protection device according to a second embodiment of the present invention complete with angular element;
- Figure 6 is a front perspective view in closed configuration of a lateral protection device according to a third embodiment of the present invention;
- Figure 7 is a rear perspective view of the lateral protection device of Figure 6;
- Figure 8 is a front perspective view in open configuration of the lateral protection device of Figure 6;
- Figure 9 is a side elevation view of the lateral protection device in the configuration of Figure 8;
- Figure 10 is a front elevation view of the lateral protection device of Figure 6;
- Figures 11 and 11a are respectively a sectional view along the line C-C of Figure 10 and an enlarged detail of this sectional view;
- Figure 12 is a perspective view of the lateral protection device of Figure 6 not mounted on the vehicle;
- Figure 13 is a perspective view of the lateral protection device of Figure 6 complete with angular element;
- Figure 14 is a front perspective view in closed configuration of a lateral protection device according to a fourth embodiment of the present invention;
- Figure 15 is a rear perspective view in open configuration of a lateral protection device according to a fifth embodiment of the present invention;
- Figures 16 and 17 are two perspective respectively rear and front views of a lateral protection device according to a sixth embodiment of the present invention;
- Figure 18 is a side elevation view of a vehicle provided with a lateral protection device according to the present invention.

### DETAILED DESCRIPTION OF THE INVENTION

In the following description, for the illustration of the figures, identical numbers or reference symbols are used to indicate construction elements with the same function. Further, for illustration clarity, some references may not be repeated in all the figures.

While the invention is susceptible to various modifications and alternative constructions, certain preferred embodiments are shown in the drawings and are described hereinbelow in detail. However, it is to be understood that there is no intention to limit the invention to the specific embodiment illustrated but, on the contrary, the invention intends to cover all the modifications, alternative and equivalent constructions that fall within the context of the invention as defined in the claims.

The use of "for example", "etc.", "or" indicates non-exclusive alternatives without limitation, unless otherwise indicated. The use of "comprises" and "includes" means "comprises or includes, but not limited to", unless otherwise indicated.

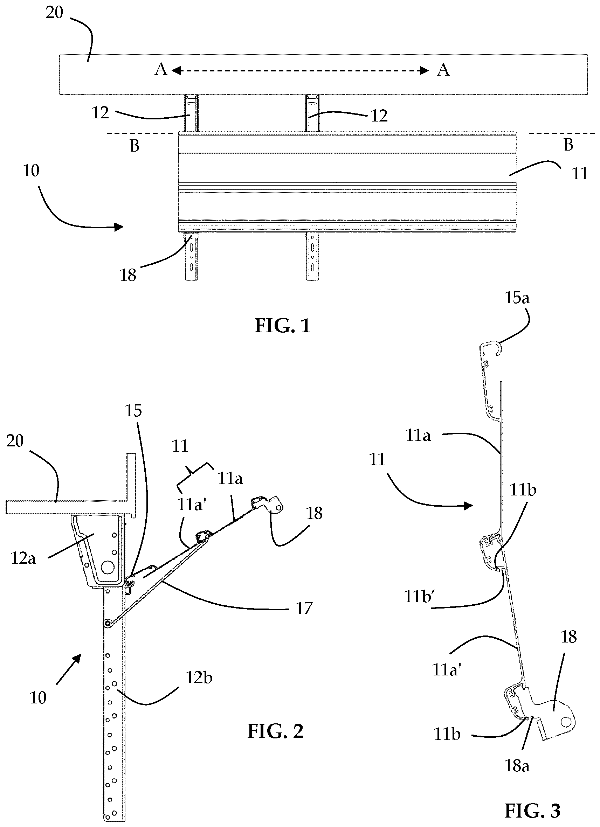

With reference to Figures 1 to 4, a first embodiment of a lateral protection device according to the present invention is illustrated, indicated as a whole with 10.

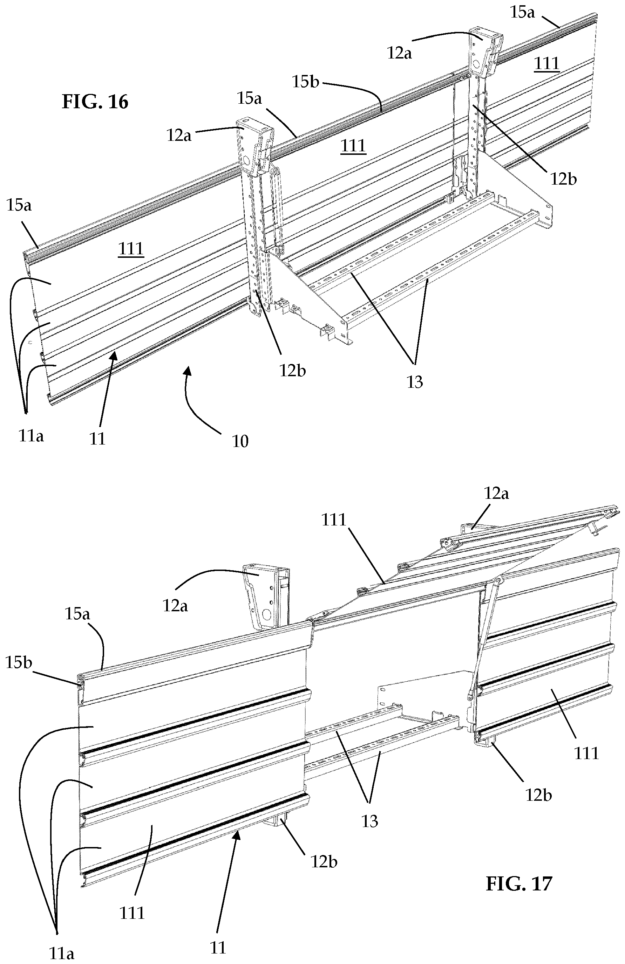

The lateral protection device 10 comprises a wall or bulkhead element 11 made up of one or more elongated bars 11a, 11a', mostly substantially flat, arranged so as to form an elongated wall element 11 having a long main development axis A. The bulkhead 11 therefore extends along the development axis A and below a side edge 20a of a platform 20 of a vehicle (illustrated in Fig. 16), remaining substantially perpendicular to the platform 20.

As illustrated in detail in Figure 3, the elongated bars 11a, 11a' are preferably made of aluminum profiles extending along the development axis A and are coupled to each other along their own side parallel to the axis development A. In detail, the bars 11a, 11a' are constrained to each other by interlocking and/or shape coupling of a nose 11b made on a first bar 11a, in a corresponding seat 11b' made on a second bar 11a'. The nose 11b and the seat 11b' preferably extend longitudinally along the side of the respective bars 11a, 11a' parallel to the development axis A in a continuous or segmented manner. By coupling two or more elongated bars 11a, 11a', it is possible to obtain a bulkhead 11 which defines a solid and continuous surface.

The bulkhead 11 is preferably terminated at its ends by means of a shaped angular element 19 also known as "angle bar".

The bulkhead 11 is supported by a plurality of support legs 12, comprising at least two support legs 12. The support legs 12 illustrated in detail in Figure 2 are of the type that can be constrained to the vehicle platform 20 so as to extend below the side edge 20a of the platform 20, remaining substantially perpendicular to the platform 20. Furthermore, in use, the support legs 12 are constrained to the platform at a distance from each other along the development axis A and in a parallel arrangement with respect to each other.

In the embodiment of Figures 1 to 4, the support legs 12 comprise a base 12a for connection to the platform 20 configured to be rigidly fixed to the platform 20, specifically to the lower wall of the same 20a, and an upright 12b hinged to the connection base 12a at one end thereof and extending substantially perpendicular to the platform 20, below the side edge 20a thereof. Said support legs 12 are therefore of the overturnable type and fixed to the platform 20 so as to define an overturning axis (not shown) of the uprights 12b parallel to the side edge 20a of the platform 20.

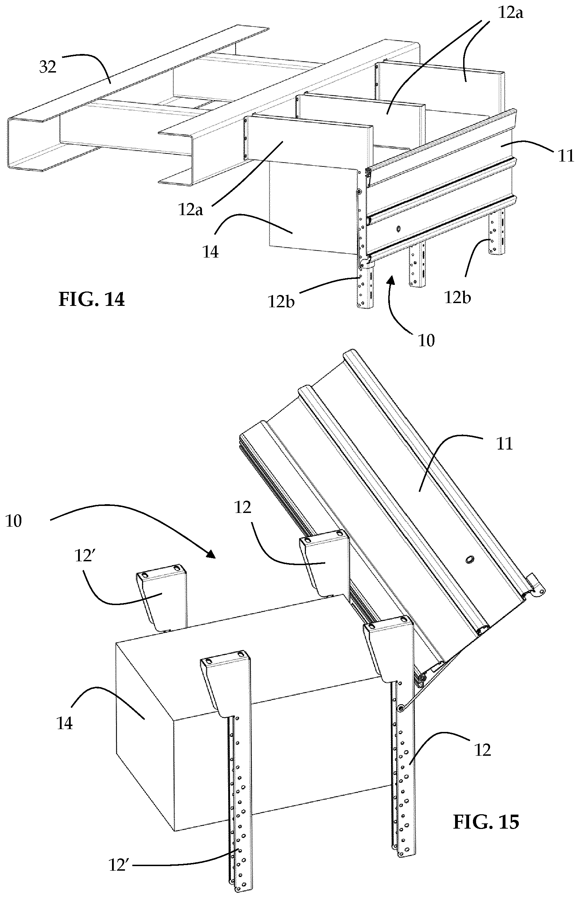

In a completely equivalent way, the support legs 12 can be of the type that can be fixedly constrained to the platform 20 or to the chassis 32 of the vehicle as shown in exemplary terms with reference to Figures 14 and 15.

According to the present invention, the bulkhead 11 is constrained to the support legs 12 in a pivotable manner around a rotation axis B, parallel to the development axis A, between a closed operating position (illustrated in Figure 1) in which the bulkhead 11 is arranged substantially parallel to a plane which comprises the support legs 12, preventing access to the space underneath the vehicle, and any operating opening position (illustrated in Figure 2) in which the bulkhead 11 is tilted with respect to the plane which comprises the support legs 12 to allow access to the space underneath the vehicle.

In the context of the present description and of the subsequent claims, the term "tilted arrangement" means any relative arrangement between the bulkhead 11 and the support legs 12 such that the plane comprising the bulkhead and the plane comprising the support legs are tilted with respect to each other by a non-zero angle, for example equal to 90°, 120° or more.

To this end, the bulkhead 11 is constrained at the top to at least two support legs 12 through a hinged coupling 15. In particular, the hinge coupling 15 is made at the upper side of the bulkhead 11 facing the vehicle, that is, at the side facing the connection base 12a of the support legs 12.

In the embodiment of Figures 1 to 4, the upper side of the bulkhead 11 facing the connection base 12a has a curved termination 15a which extends longitudinally parallel to the development axis A.

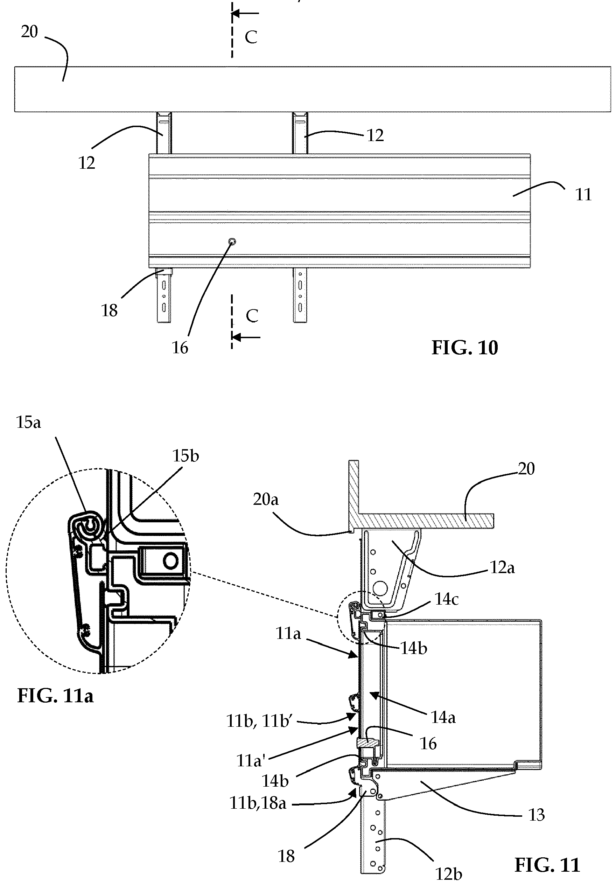

As shown in detail in Figure 10a (albeit with reference to a different embodiment), the curved termination 15a is slidably housed inside a rail 15b which has extension and curvature complementary to that of the upper side of the bulkhead 11 and it is fixed rigidly to at least two support legs 12. The rail 15b guides the curved termination 15a during rotation around the axis of rotation B, thus achieving the hinge coupling 15.

In the embodiment of Figures 1 to 4, the rail 15b is made through a continuous profile element constrained to all the support legs 12.

In a completely equivalent way, the rail 15b can be made discontinuous through two or more rail sections, each constrained to a respective support leg 12 so as to delineate a line parallel to the development axis A. In this case, the curved termination 15a is in turn made in several parts, each housed in a respective rail section 15b.

Means 17 are also provided for temporarily locking the bulkhead 11 in a specific operating opening position in which the bulkhead 11 is arranged so as to allow access to the space beneath the vehicle. The temporary locking means 17 are preferably made in the form of a bar hinged to its own first end to a support leg 12.

In the condition of temporary locking of the bulkhead 11, the second free end of the rod 17 is inserted in a seat made on the bulkhead 11 so as to stably maintain a reciprocal arrangement between the bulkhead 11 and the support legs 12 in which the bulkhead is arranged so as to allow access to the space under the vehicle.

The bulkhead 11 also comprises a fixing bracket 18 shaped to at least partially embrace a support leg 12 when the bulkhead 11 is in its closed operating position. The fixing bracket 18 comprises at least one through hole placed so as to overlap a corresponding through hole made on the support leg 12, when the fixing bracket 18 embraces the leg 12. The two overlapping holes allow the insertion of a locking element, such as a pin (not illustrated) or a padlock (not illustrated).

As shown in Figure 3, the fixing bracket 18 is preferably made as an element that is couplable to an elongated bar 11a, 11a' of the bulkhead 11. To this end, the fixing bracket 18 comprises a recess 18a configured to retain the nose 11b made on the elongated bar 11a' arranged farther away from the connection base 12a of the support legs 12 by interlocking and/or shape coupling.

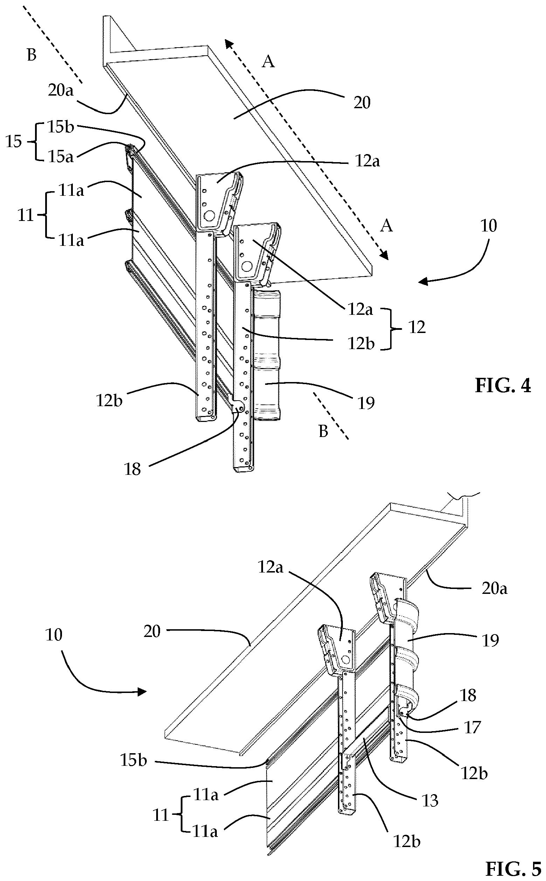

With reference to Figure 5, a second embodiment of a lateral protection device according to the present invention is illustrated which, in addition to the parts described with reference to the embodiment of Figures 1 to 4, comprises a rigid connection element 13, made in the form of a rod, constrained directly to at least two support legs 12 of the series of support legs 12 in order to increase the overall structural rigidity of the lateral protection device 10.

The rigid connection element 13 is configured to maintain the support legs 12 to which it is constrained according to a reciprocal fixed, parallel arrangement and spaced apart along the development axis A.

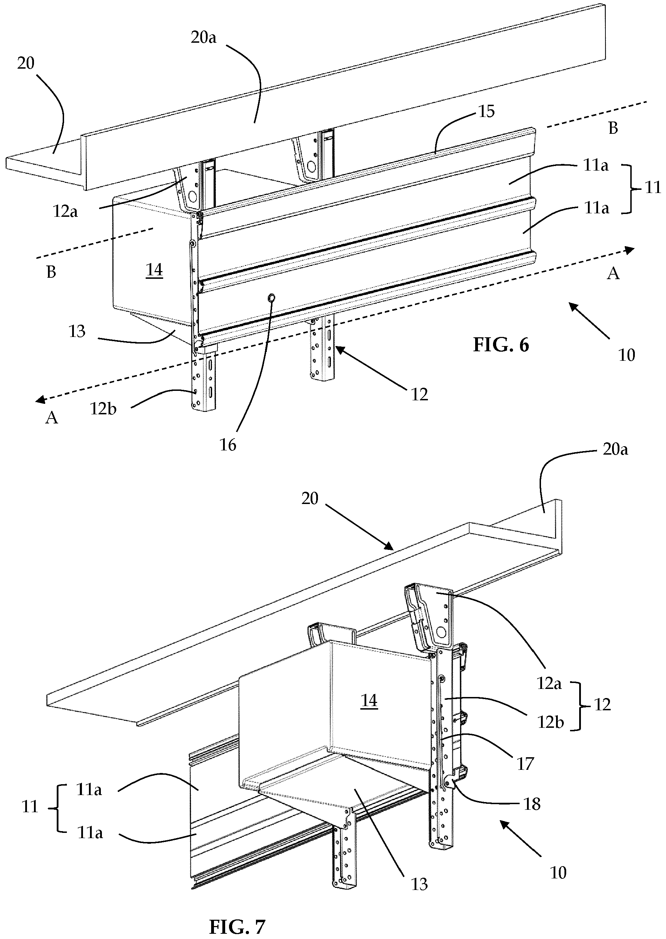

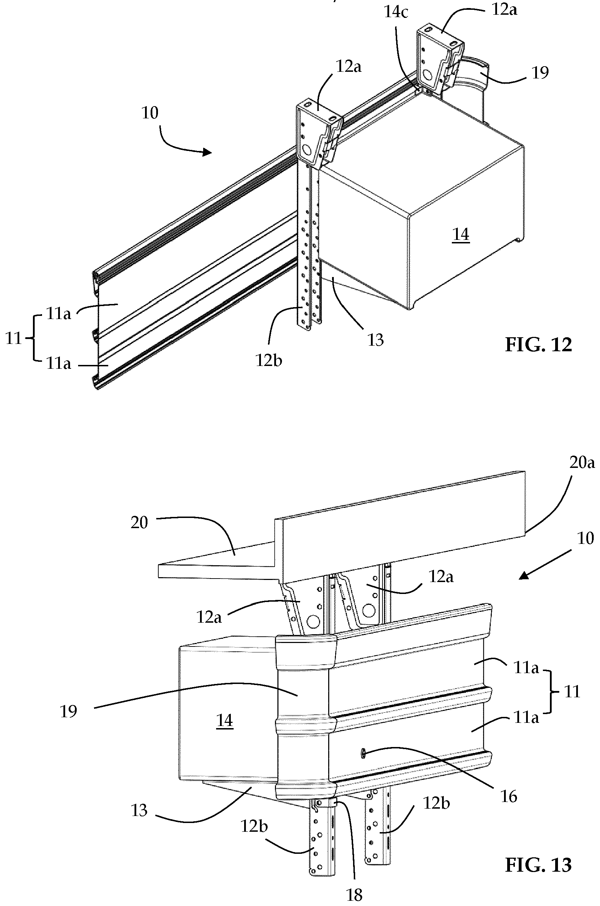

With reference to Figures 6-13, a third embodiment is shown according to which the rigid connection element 13 is advantageously made in the form of a support shelf 13 extending beneath the platform 20 of the vehicle according to an arrangement substantially parallel to the platform 20.

The shelf-like connection element 13 thus defines a rest surface on which a hollow box-like element 14 defining a containment space can rest and possibly be constrained in a fixed manner. The box-like element 14, once constrained to the shelf-like element 13 or, alternatively or in addition, to the support legs 12, is positioned below the vehicle. In particular, the box-like element 14 comprises an access opening 14a facing the support legs 12.

In addition to the constraint to the shelf 13, means 14c are provided for fixing the hollow box-like element 14 to the support legs, 12 so that an overturning of the hollow box-like element 14 is prevented.

In the embodiment illustrated in Figures 6-13, the entire bulkhead 11 acts as a hinged overturnable cover for closing the opening 14a of the box-like element 14, allowing the box-like element 14 to be made with dimensions substantially corresponding to the space available below the vehicle (embodiment not illustrated in the figures).

The box-like element 14 advantageously comprises a sealing element 14b, such as for example a gasket, placed along the perimeter of its opening 14a. Thanks to this sealing element 14b and to the assembly on the same support legs 12 of the bulkhead 11 and of the box-like element 14, which allows to easily achieve a precise relative positioning, it is possible to obtain a correct support of the bulkhead 11 on the sealing element 14b and, in this way, a sealing closure of the box-like element 14.

The bulkhead 11 advantageously comprises a selective locking element 16, such as for example a lock, configured to provide a stable, but selectively releasable, constraint between the bulkhead 11 and the box-like element 14. For example, the selective locking element 16 is configured to go into selective engagement with the edge 14a of the box-like element 14.

With reference to Figure 14, a fourth embodiment is shown according to which the rigid connection element 14 is advantageously made in the form of a hollow box-like element directly connected to the support legs 12, i.e. in the absence of a shelf-like element. In this way it is possible to convey rigidity to the lateral protection device as a whole and at the same time to exploit the free space underneath the vehicle.

In the embodiment of Figure 14, the support legs 12 each comprise a connection base 12a configured to be rigidly constrained to the vehicle chassis 32 and an upright 12b fixedly connected to the connection base 12a, that is, not overturnable with respect to it 12a.

With reference to Figure 15, a fifth embodiment is shown comprising a rigid connection element in the form of a hollow box-like element 14 defining a particularly deep containment space. In this case, in order to guarantee the support of a high load, the lateral protection device comprises at least one pair of internal support legs 12' configured to be rigidly fixed to the platform 20 or to the chassis 32 of the vehicle 30 in a position closer to a centreline of the platform 20 or of the chassis 32 with respect to the support legs 12 fixed more externally, for example to the edge of the platform 20 or chassis 32, according to a spaced and parallel arrangement with respect to the arrangement of the pair of more external support legs 12. Also in this case the support legs 12, 12' each comprise a connection base 12a configured to be rigidly constrained to the platform 20 or to the chassis 32 of the vehicle and an upright 12b connected in a fixed manner to the connection base 12a, that is, not overturnable with respect to the same 12a.

With reference to Figures 16 and 17, a sixth embodiment is shown according to which the bulkhead 11 is made up of a plurality of wall sections 111 arranged coplanar and side by side along the development axis A. Each wall section 111 comprises, at its upper side facing the connection base 12a, a curved termination 15a which cooperates with a complementary curved rail 15b so as to guide the curved termination 15a during rotation around the rotation axis B, thus achieving a hinged coupling 15. In the embodiment of Figures 16 and 17, the rail 15b is unique and common to the various wall sections 111, and is fixed rigidly to at least two support legs 12. Each wall section 111 can be rotated around the rotation axis B independently of the further wall sections 111.

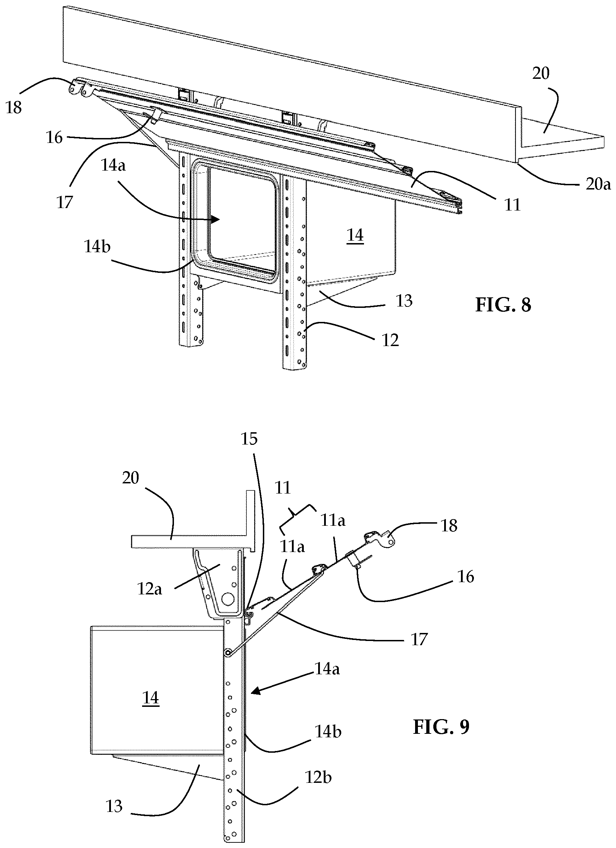

Furthermore, the rigid connection element 13 is advantageously made in the form of a rack 13 extending beneath the platform 20 of the vehicle according to an arrangement substantially parallel to the platform 20. The rack 13 is for example configured to support and ensure a fixed connection to a hollow box-like element (not shown) having an opening facing the corresponding wall section 111. In this way the wall section 111 acts as an overturnable cover for closing the opening of the box-like element constrained to the rack 13. Like for the embodiment illustrated in Figure 8, the box-like element advantageously comprises a sealing element, for example a gasket, placed along the perimeter of its own opening and configured to rest against the wall section so as to provide a sealing closure of the box-like element.

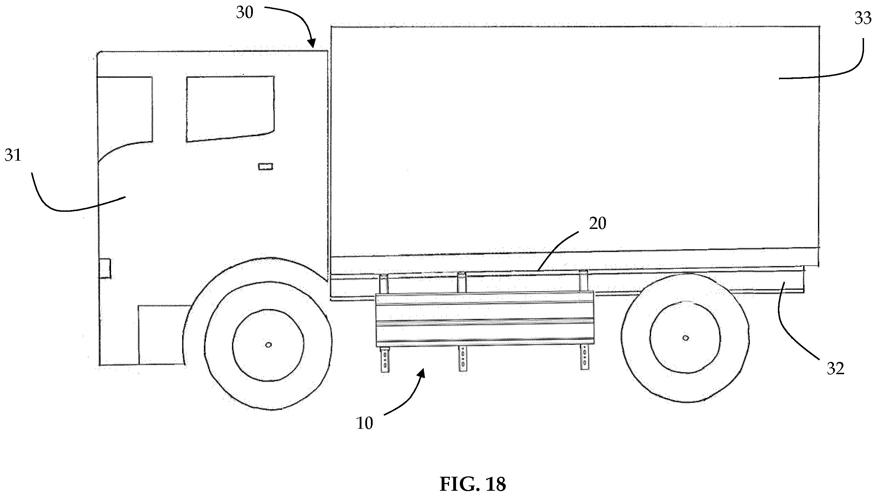

Finally, Figure 18 shows a vehicle 30 comprising a lateral protection device 10 connected to its own platform 20. Specifically, the vehicle of Figure 16 is a truck 30 comprising a cabin 31 and a chassis 32 on which a load space 33 is arranged, terminated at the bottom by the platform 20 which supports the lateral protection device 10.

## Claims

1. Lateral protection device (10) for heavy road vehicles comprising
- a plurality of support legs (12) comprising at least two support legs (12) each comprising a connection base (12a) configured to be rigidly fixed to a platform (20) or to a chassis (32) of a heavy road vehicle (30) according to a fixed reciprocal arrangement, parallel and spaced along a development axis (A) and an upright (12b) connected to the connection base (12a) at one of its ends, the uprights (12b) of the plurality of the support legs (12) being substantially linear, so that the set of uprights (12b) of the plurality of support legs (12) defines a plane of the uprights (12b) of the support legs (12), and
- at least one wall element (11) extending elongated along the development axis (A) and constrained to at least two first support legs (12) of the plurality of support legs (12),
**characterized in that** the wall element (11) is constrained to the uprights (12b) of the at least two first support legs (12) at its own side facing the connection bases (12a) of the support legs (12) so as to pivot around a rotation axis (B), parallel to the development axis (A), between a closed operating position in which the wall element (11) is arranged substantially parallel to the plane of the uprights (12b) of the support legs (12) and at least an operating opening position in which the wall element (11) is tilted with respect to the plane of the uprights (12b) of the support legs (12).

2. Lateral protection device (10) according to claim 1, comprising at least one rigid connection element (13,14) fixed in a direct and rigid manner to at least two second support legs (12) of the plurality of support legs (12) and configured to maintain the at least two second support legs (12) according to the fixed, parallel arrangement and spaced apart along the development axis (A).

3. Lateral protection device (10) according to claim 2, wherein the at least one rigid connection element (13,14) is a rod or a shelf-like element or a rack or a hollow box-like element (14) defining a containment space and having an access opening (14a) to the containment space facing towards said plurality of support legs (12).

4. Lateral protection device (10) according to claim 3, wherein the hollow box-like element (14) comprises a sealing element (14b) placed along the perimeter of its opening (14a) and configured to rest against the wall element (11) when it is in the closed operating position.

5. Lateral protection device (10) according to any one of the preceding claims, wherein the at least one wall element (11) comprises a plurality of elongated bars (11a, 11a') arranged side by side adjacent to each other or side by side spaced apart from each other.

6. Lateral protection device (10) according to any one of the preceding claims 1 to 4, wherein the at least one wall element (11) comprises a plurality of elongated bars (11a, 11a') arranged side by side adjacent to each other and wherein the elongated bars (11a, 11a') are profile elements respectively comprising a nose (11b) extending along the development axis (A) and/or a seat (11b') also extending along the development axis (A) and configured to receive and retain the nose (11b) obtained on an adjacent bar (11a).

7. Lateral protection device (10) according to any one of the preceding claims, wherein the wall element (11) is constrained to the uprights (12b) of the at least two first support legs (12) through at least one hinged coupling, parallel to the development axis (A).

8. Lateral protection device (10) according to any one of the preceding claims, wherein the wall element (11) has a curved termination (15a) at its own side facing the connection base (12a) of the support legs (12), the curved termination (15a) extending longitudinally parallel to the development axis (A) and being movably housed inside a rail (15b) with a complementary conformation to the curved termination (15a) and rigidly constrained to the uprights (12b) of the at least two first support legs (12), the rail (15b) being configured to guide the curved termination during rotation about the rotation axis (B).

9. Lateral protection device (10) according to claim 8, wherein the rail (15b) comprises a plurality of rail segments each constrained to a respective upright of a respective first support leg (12) according to an arrangement parallel to the development axis (A), each rail segment housing a respective curved termination section (15a) to achieve a hinged coupling between the wall element (11) and the uprights (12b) of the first support legs (12).

10. Lateral protection device (10) according to any one of the preceding claims, wherein the wall element (11) comprises at least one fixing bracket (18) which can be coupled to at least one support leg (12) of the plurality of support legs (12) when the wall element (11) is in its closed operating position.

11. Lateral protection device (10) according to claim 10, wherein the fixing bracket (18) comprises at least one through hole placed so as to overlap a corresponding through hole made on the upright (12b) of the support leg (12) when the fixing bracket (12b) embraces the upright (12b).

12. Lateral protection device (10) according to any one of claims 3 to 11, wherein the at least one wall element (11) comprises a selective locking element (16) configured to go into selective engagement with an edge of the opening (14a) of the box-like element (14).

13. Lateral protection device (10) according to any one of the preceding claims, wherein the upright (12b) is hinged at its own end to the respective connection base (12a).

14. Lateral protection device (10) according to any one of the preceding claims, wherein the at least one wall element (11) is made of a plurality of wall sections (111) each pivotable about the rotation axis (B) independently of the further wall sections (111).

15. Heavy road vehicle (30) comprising a chassis (32) and a platform (20) having a side edge (20a) and a lateral protection device (10) connected to the platform (20) or to the chassis (32) so as to extend below the side edge (20a) of the platform (20) substantially perpendicularly to the platform (20) **characterized in that** the lateral protection device (10) is made according to any one of the preceding claims.

## Patentansprüche

1. Seitenschutzvorrichtung (10) für schwere Straßenfahrzeuge, aufweisend
- eine Vielzahl von Stützbeinen (12), die mindestens zwei Stützbeine (12) aufweisen, von denen jedes eine Verbindungsbasis (12a), die derart konfiguriert ist, dass sie starr an einer Plattform (20) oder an einem Fahrgestell (32) eines schweren Straßenfahrzeugs (30) gemäß einer festen Wechselanordnung befestigt werden kann, wobei die Vielzahl von Stützbeinen (12) parallel und beabstandet entlang einer Verlaufsachse (A) angeordnet ist, und ein Pfosten (12b) aufweist, der mit der Verbindungsbasis (12a) an einem ihrer Enden verbunden ist, wobei die Pfosten (12b) der Vielzahl von Stützbeinen (12) im Wesentlichen gerade sind, so dass der Satz von Pfosten (12b) der Vielzahl von Stützbeinen (12) eine Ebene der Pfosten (12b) der Stützbeine (12) definiert, und
- mindestens ein Wandelement (11), das sich länglich entlang der Verlaufsachse (A) erstreckt und an mindestens zwei ersten Stützbeinen (12) der Vielzahl von Stützbeinen (12) gehalten wird,
**dadurch gekennzeichnet, dass** das Wandelement (11) an den Pfosten (12b) der mindestens zwei ersten Stützbeine (12) an seiner eigenen, den Verbindungsbasen (12a) der Stützbeine (12) zugewandten Seite so gehalten ist, dass es um eine zur Verlaufsachse (A) parallele Drehachse (B) zwischen einer geschlossenen Betriebsposition, in der das Wandelement (11) im Wesentlichen parallel zur Ebene der Pfosten (12b) der Stützbeine (12) angeordnet ist, und mindestens einer offenen Betriebsposition schwenkt, in der das Wandelement (11) in Bezug auf die Ebene der Pfosten (12b) der Stützbeine (12) geneigt ist.

2. Seitenschutzvorrichtung (10) nach Anspruch 1, die mindestens ein starres Verbindungselement (13, 14) aufweist, das direkt und starr an mindestens zwei zweiten Stützbeinen (12) der Vielzahl von Stützbeinen (12) befestigt ist und derart konfiguriert ist, dass die mindestens zwei zweiten Stützbeine (12) gemäß der festen, paralellen Anordnung und entlang der Verlaufsachse (A) beabstandet gehalten werden.

3. Seitenschutzvorrichtung (10) nach Anspruch 2, wobei das mindestens eine starre Verbindungselement (13, 14) eine Stange oder ein fachbodenartiges Element oder ein Gestell oder ein hohles kastenartiges Element (14) ist, das einen Aufnahmeraum definiert und eine Zugangsöffnung (14a) zu dem Aufnahmeraum aufweist, die der Vielzahl von Stützbeinen (12) zugewandt ist.

4. Seitenschutzvorrichtung (10) nach Anspruch 3, wobei das hohle kastenartige Element (14) ein Dichtungselement (14b) aufweist, das entlang des Umfangs seiner Öffnung (14a) angeordnet und derart konfiguriert ist, dass es an dem Wandelement (11) anliegt, wenn es sich in der geschlossenen Betriebsstellung befindet.

5. Seitenschutzvorrichtung (10) nach einem der vorhergehenden Ansprüche, wobei das mindestens eine Wandelement (11) eine Vielzahl von länglichen Stäben (11a, 11a') aufweist, die seitlich nebeneinander oder seitlich beabstandet zueinander angeordnet sind.

6. Seitenschutzvorrichtung (10) nach einem der vorhergehenden Ansprüche 1 bis 4, wobei das mindestens eine Wandelement (11) eine Vielzahl von länglichen Stäben (11a, 11a') aufweist, die seitlich nebeneinander angeordnet sind, und wobei die länglichen Stäbe (11a, 11a') Profilelemente darstellen, diejeweils eine sich entlang der Verlaufsachse (A) erstreckende Nase (11b) und/oder einen sich ebenfalls entlang der Verlaufsachse (A) erstreckenden Sitz (11b') aufweisen und derart konfiguriert sind, dass sie die an einem benachbarten Stab (11a) gebildete Nase (11b) aufnehmen und festhalten.

7. Seitenschutzvorrichtung (10) nach einem der vorhergehenden Ansprüche, wobei das Wandelement (11) an den Pfosten (12b) der mindestens zwei ersten Stützbeine (12) durch mindestens eine gelenkige Verbindung parallel zur Verlaufsachse (A) gehalten ist.

8. Seitenschutzvorrichtung (10) nach einem der vorhergehenden Ansprüche, wobei das Wandelement (11) einen gebogener Endabschnitt (15a) an seiner eigenen, der Verbindungsbasis (12a) der Stützbeine (12) zugewandten Seite aufweist, der gebogene Endabschnitt (15a) sich in Längsrichtung parallel zur Verlaufsachse (A) erstreckt und beweglich in einer Schiene (15b) untergebracht ist, die eine zu dem gebogenen Endabschnitt (15a) komplementäre Form aufweist und starr an den Pfosten (12b) der mindestens zwei ersten Stützbeine (12) gehalten ist, wobei die Schiene (15b) derart konfiguriert ist, dass sie den gebogenen Endabschnitt während der Drehung um die Drehachse (B) führt.

9. Seitenschutzvorrichtung (10) nach Anspruch 8, wobei die Schiene (15b) eine Vielzahl von Schienensegmenten aufweist, die jeweils an einem entsprechenden Pfosten eines entsprechenden ersten Stützbeins (12) gemäß einer Anordnung parallel zur Verlaufsachse (A) gehalten wird, wobei jedes Schienensegment einen entsprechenden gebogenen Endabschnitt (15a) aufnimmt, um eine gelenkige Verbindung zwischen dem Wandelement (11) und den Pfosten (12b) der ersten Stützbeine (12) zu erreichen.

10. Seitenschutzvorrichtung (10) nach einem der vorhergehenden Ansprüche, wobei das Wandelement (11) mindestens einen Befestigungswinkel (18) aufweist, der mit mindestens einem Stützbein (12) der Vielzahl von Stützbeinen (12) gekoppelt werden kann, wenn sich das Wandelement (11) in seiner geschlossenen Betriebsstellung befindet.

11. Seitenschutzvorrichtung (10) nach Anspruch 10, wobei der Befestigungswinkel (18) mindestens ein Durchgangsloch aufweist, das derart angeordnet ist, dass es ein entsprechendes Durchgangsloch überlappt, das am Pfosten (12b) des Stützbeins (12) ausgebildet ist, wenn der Befestigungswinkel (12b) den Pfosten (12b) umgreift.

12. Seitenschutzvorrichtung (10) nach einem der Ansprüche 3 bis 11, wobei das mindestens eine Wandelement (11) ein selektives Verriegelungselement (16) aufweist, das derart konfiguriert ist, dass es in selektiven Eingriff mit einer Kante der Öffnung (14a) des kastenartigen Elements (14) tritt.

13. Seitenschutzvorrichtung (10) nach einem der vorhergehenden Ansprüche, wobei der Pfosten (12b) an seinem eigenen Ende an der jeweiligen Verbindungsbasis (12a) angelenkt ist.

14. Seitenschutzvorrichtung (10) nach einem der vorhergehenden Ansprüche, wobei das mindestens eine Wandelement (11) aus einer Vielzahl von Wandabschnitten (111) besteht, die jeweils unabhängig von den weiteren Wandabschnitten (111) um die Drehachse (B) schwenkbar sind.

15. Schweres Straßenfahrzeug (30), das ein Fahrgestell (32) und eine Plattform (20) mit einer Seitenkante (20a) und eine Seitenschutzvorrichtung (10) aufweist, die mit der Plattform (20) oder dem Fahrgestell (32) derart verbunden ist, dass sie sich unterhalb der Seitenkante (20a) der Plattform (20) im Wesentlichen senkrecht zur Plattform (20) erstreckt, **dadurch gekennzeichnet, dass** die Seitenschutzvorrichtung (10) nach einem der vorhergehenden Ansprüche ausgebildet ist.

## Revendications

1. Dispositif de protection latérale (10) pour poids lourds, comprenant
une pluralité de pieds de support (12) comprenant au moins deux pieds de support (12) comprenant chacun une base de liaison (12a) configurée pour être fixée rigidement à une plate-forme (20) ou à un châssis (32) d'un poids lourd (30) selon un agencement réciproque fixe, parallèle et espacé le long d'un axe de développement (A), et un montant (12b) relié à la base de liaison (12a) à l'une de ses extrémités, les montants (12b) de la pluralité de pieds de support (12) étant sensiblement linéaires, de telle sorte que l'ensemble de montants (12b) de la pluralité de pieds de support (12) définit un plan des montants (12b) des pieds de support (12), et
- au moins un élément de paroi (11) allongé le long de l'axe de développement (A) et contraint à au moins deux premiers pieds de support (12) de la pluralité de pieds de support (12),
**caractérisé par le fait que** l'élément de paroi (11) est contraint aux montants (12b) des au moins deux premiers pieds de support (12) sur son propre côté tourné vers les bases de liaison (12a) des pieds de support (12) de façon à pivoter autour d'un axe de rotation (B), parallèle à l'axe de développement (A), entre une position de fonctionnement fermée dans laquelle l'élément de paroi (11) est disposé sensiblement parallèlement au plan des montants (12b) des pieds de support (12) et au moins une position de fonctionnement ouverte dans laquelle l'élément de paroi (11) est incliné par rapport au plan des montants (12b) des pieds de support (12).

2. Dispositif de protection latérale (10) selon la revendication 1, comprenant au moins un élément de liaison rigide (13, 14) fixé d'une manière directe et rigide à au moins deux seconds pieds de support (12) de la pluralité de pieds de support (12) et configuré pour maintenir les au moins deux seconds pieds de support (12) selon l'agencement fixe, parallèle et espacé le long de l'axe de développement (A).

3. Dispositif de protection latérale (10) selon la revendication 2, dans lequel l'au moins un élément de liaison rigide (13, 14) est une tige ou un élément de type tablette ou une étagère ou un élément de type boîte creuse (14) définissant un espace de confinement et ayant une ouverture d'accès (14a) à l'espace de confinement faisant face à ladite pluralité de pieds de support (12).

4. Dispositif de protection latérale (10) selon la revendication 3, dans lequel l'élément de type boîte creuse (14) comprend un élément d'étanchéité (14b) placé le long du périmètre de son ouverture (14a) et configuré pour s'appuyer contre l'élément de paroi (11) lorsqu'il est en position de fonctionnement fermée.

5. Dispositif de protection latérale (10) selon l'une quelconque des revendications précédentes, dans lequel l'au moins un élément de paroi (11) comprend une pluralité de barres allongées (11a, 11a') disposées côte à côte adjacentes les unes aux autres ou côte à côte espacées les unes des autres.

6. Dispositif de protection latérale (10) selon l'une quelconque des revendications précédentes 1 à 4, dans lequel l'au moins un élément de paroi (11) comprend une pluralité de barres allongées (11a, 11a') disposées côte à côte adjacentes les unes aux autres, et dans lequel les barres allongées (11a, 11a') sont des éléments profilés comprenant respectivement un nez (11b) s'étendant le long de l'axe de développement (A) et/ou un siège (11b') s'étendant également le long de l'axe de développement (A) et configuré pour recevoir et retenir le nez (11b) obtenu sur une barre adjacente (11a).

7. Dispositif de protection latérale (10) selon l'une quelconque des revendications précédentes, dans lequel l'élément de paroi (11) est contraint aux montants (12b) des au moins deux premiers pieds de support (12) par l'intermédiaire d'au moins un couplage articulé, parallèle à l'axe de développement (A).

8. Dispositif de protection latérale (10) selon l'une quelconque des revendications précédentes, dans lequel l'élément de paroi (11) a une extrémité incurvée (15a) sur son propre côté tourné vers la base de liaison (12a) des pieds de support (12), l'extrémité incurvée (15a) s'étendant longitudinalement parallèlement à l'axe de développement (A) et étant reçue de manière mobile à l'intérieur d'un rail (15b) ayant une conformation complémentaire à l'extrémité incurvée (15a) et contraint rigidement aux montants (12b) des au moins deux premiers pieds de support (12), le rail (15b) étant configuré pour guider l'extrémité incurvée lors d'une rotation autour de l'axe de rotation (B).

9. Dispositif de protection latérale (10) selon la revendication 8, dans lequel le rail (15b) comprend une pluralité de segments de rail, chacun étant contraint à un montant respectif d'un premier pied de support respectif (12) selon un agencement parallèle à l'axe de développement (A), chaque segment de rail recevant une section d'extrémité incurvée respective (15a) pour réaliser un couplage articulé entre l'élément de paroi (11) et les montants (12b) des premiers pieds de support (12).

10. Dispositif de protection latérale (10) selon l'une quelconque des revendications précédentes, dans lequel l'élément de paroi (11) comprend au moins une patte de fixation (18) qui peut être couplée à au moins un pied de support (12) de la pluralité de pieds de support (12) lorsque l'élément de paroi (11) est dans sa position de fonctionnement fermée.

11. Dispositif de protection latérale (10) selon la revendication 10, dans lequel la patte de fixation (18) comprend au moins un trou traversant placé de façon à se superposer à un trou traversant correspondant réalisé sur le montant (12b) du pied de support (12) lorsque la patte de fixation (12b) entoure le montant (12b).

12. Dispositif de protection latérale (10) selon l'une quelconque des revendications 3 à 11, dans lequel l'au moins un élément de paroi (11) comprend un élément de verrouillage sélectif (16) configuré pour entrer en prise sélective avec un bord de l'ouverture (14a) de l'élément de type boîte (14).

13. Dispositif de protection latérale (10) selon l'une quelconque des revendications précédentes, dans lequel le montant (12b) est articulé, au niveau de sa propre extrémité, à la base de liaison respective (12a).

14. Dispositif de protection latérale (10) selon l'une quelconque des revendications précédentes, dans lequel l'au moins un élément de paroi (11) est fait d'une pluralité de sections de paroi (111) chacune apte à pivoter autour de l'axe de rotation (B) indépendamment des autres sections de paroi (111).

15. Poids lourd (30) comprenant un châssis (32) et une plate-forme (20) ayant un bord latéral (20a) et un dispositif de protection latérale (10) relié à la plate-forme (20) ou au châssis (32) de façon à s'étendre au-dessous du bord latéral (20a) de la plate-forme (20) sensiblement perpendiculairement à la plate-forme (20), **caractérisé par le fait que** le dispositif de protection latérale (10) est réalisé selon l'une quelconque des revendications précédentes.
